# EUROPEAN PATENT APPLICATION

(11) **EP 4 564 573 A1**
(43) Date of publication of application: **04.06.2025**
(21) Application number: 23846305.3
(22) Date of filing: 18.07.2023
(51) Int. Cl.: H01M 50/443, H01M 4/13, H01M 50/403, H01M 50/414, H01M 50/434, H01M 50/446, H01M 50/451, H01M 50/489

(54) **BINDER FOR SECONDARY BATTERY FUNCTIONAL LAYER, SLURRY COMPOSITION FOR SECONDARY BATTERY FUNCTIONAL LAYER, SECONDARY BATTERY FUNCTIONAL LAYER, AND SECONDARY BATTERY**

(30) Priority: 29.07.2022 JP 2022122348
(71) Applicant: Zeon Corporation, Tokyo 100-8246 (JP)
(72) Inventor: MATSUNO, Hirohiko, Tokyo 100-8246 (JP)
(74) Representative: Maiwald GmbH
(86) International application number: PCT/JP2023/026299
(87) International publication number: WO 2024/024574

(57) **Abstract**

Provided is a binder for a secondary battery functional layer that can form a functional layer having excellent heat shrinkage resistance, adhesiveness, and preservation stability. The binder for a secondary battery functional layer contains a particulate polymer including an acidic functional group-containing monomer unit and a reactive functional group-containing monomer unit including a functional group that can react with an acidic functional group. The proportional content of the reactive functional group-containing monomer unit is not less than 7 mass% and not more than 30 mass% when all monomer units included in the particulate polymer are taken to be 100 mass%. A film that is formed of the particulate polymer after accelerated testing has an elastic modulus of 10 MPa or less.

## Description

### TECHNICAL FIELD

The present disclosure relates to a binder for a secondary battery functional layer, a slurry composition for a secondary battery functional layer, a functional layer for a secondary battery, and a secondary battery.

### BACKGROUND

Secondary batteries such as lithium ion secondary batteries have characteristics such as compact size, light weight, high energy-density, and the ability to be repeatedly charged and discharged, and are used in a wide range of applications. A secondary battery generally includes battery members such as electrodes (positive electrode and negative electrode) and a separator that isolates the positive electrode and the negative electrode from each other and prevents short-circuiting between the positive and negative electrodes.

A battery member of a secondary battery may be a member including a functional layer that contains a binding material and that optionally also contains particles (hereinafter, referred to as "functional particles") that are compounded in order to cause the battery member to display a desired function.

Specifically, a separator of a secondary battery may be a separator that includes an adhesive layer containing a binding material or a porous membrane layer containing a binding material and non-conductive particles as functional particles on a separator substrate. Moreover, an electrode of a secondary battery may be an electrode that includes an adhesive layer or a porous membrane layer such as described above on an electrode substrate in which an electrode mixed material layer is provided on a current collector.

Attempts have previously been made to improve binding materials in order to achieve further improvement of secondary battery performance. For example, Patent Literature (PTL) 1 discloses a binder for a non-aqueous secondary battery functional layer containing a particulate polymer that includes a (meth)acrylic acid alkyl ester monomer unit, an aromatic monovinyl monomer unit, an epoxy/N-methylol cross-linkable monomer unit, and a polyvalent ethylenically unsaturated cross-linkable monomer unit in specific proportions and that has a degree of swelling in non-aqueous electrolyte solution that is within a specific range. According to PTL 1, the use of this binder enables the formation of a functional layer having excellent adhesiveness both before and after immersion in electrolyte solution and can also enhance life characteristics of a non-aqueous secondary battery including the functional layer.

### CITATION LIST

### Patent Literature

PTL 1: JP6515574B2

### SUMMARY

### (Technical Problem)

In the case of a functional layer that is formed using the binder of the conventional technique described above, there is room for improvement of heat shrinkage resistance.

Moreover, in the case of a functional layer that is formed using the binder of the conventional technique described above, there is also room for further improvement of adhesiveness of the functional layer.

Furthermore, it is desirable that a functional layer formed using a binder has a low tendency to experience reduction of heat shrinkage resistance and adhesiveness even after a long time has passed (i.e., to have excellent preservation stability).

Accordingly, one object of the present disclosure is to provide a binder for a secondary battery functional layer that can form a functional layer having excellent heat shrinkage resistance, adhesiveness, and preservation stability.

Another object of the present disclosure is to provide a slurry composition for a secondary battery functional layer that can form a functional layer having excellent heat shrinkage resistance, adhesiveness, and preservation stability.

Another object of the present disclosure is to provide a functional layer for a secondary battery having excellent heat shrinkage resistance, adhesiveness, and preservation stability.

Another object of the present disclosure is to provide a secondary battery including this functional layer.

### (Solution to Problem)

The inventor conducted diligent investigation with the aim of solving the problems set forth above. The inventor made a new discovery that the problems set forth above can be solved by using a binder containing a particulate polymer that has a specific chemical composition and characteristic, and, in this manner, completed the present disclosure.

Specifically, with the aim of advantageously solving the problems set forth above, [1] a presently disclosed binder for a secondary battery functional layer comprises a particulate polymer, wherein the particulate polymer includes an acidic functional group-containing monomer unit and a reactive functional group-containing monomer unit including a functional group that can react with an acidic functional group, proportional content of the reactive functional group-containing monomer unit is not less than 7 mass% and not more than 30 mass% when all monomer units included in the particulate polymer are taken to be 100 mass%, and a film that is formed of the particulate polymer after accelerated testing has an elastic modulus of 10 MPa or less.

With a binder for a secondary battery functional layer such as set forth above, it is possible to form a functional layer having excellent heat shrinkage resistance, adhesiveness, and preservation stability.

The phrase "includes a monomer unit" as used in the present specification means that "a polymer obtained using the monomer includes a repeating unit derived from the monomer".

The "proportional content (mass%)" of each monomer unit (each repeating unit) included in a polymer that is referred to in the present specification can be measured by a nuclear magnetic resonance (NMR) method such as ¹H-NMR or ¹³C-NMR. Note that in the case of an acidic functional group-containing monomer unit, the type of acidic functional group-containing monomer unit is identified (qualified) by nuclear magnetic resonance (NMR) and the proportional content of the acidic functional group-containing monomer unit included in a polymer is measured (quantified) by conductometric titration. In the conductometric titration, the binder for a secondary battery functional layer is diluted to an appropriate concentration, and then titration is performed using sodium hydroxide aqueous solution and hydrochloric acid aqueous solution to thereby enable measurement of the amount of acid.

The "functional group that can react with an acidic functional group" that is referred to in the present specification may be a cyclic ether group, a hydroxy group, or an amide group.

The elastic modulus of a film formed of a particulate polymer after accelerated testing that is referred to in the present specification can be measured according to a procedure and method described in the EXAMPLES section.

[2] In the binder for a secondary battery functional layer according to the foregoing [1], proportional content of the acidic functional group-containing monomer unit is preferably not less than 0.1 mass% and not more than 1 mass% when all monomer units included in the particulate polymer are taken to be 100 mass%.

When the proportional content of the acidic functional group-containing monomer unit is not less than the lower limit set forth above when all monomer units included in the particulate polymer are taken to be 100 mass%, the particulate polymer is easy to produce, and preservation stability of a functional layer can be improved.

On the other hand, when the proportional content of the acidic functional group-containing monomer unit is not more than the upper limit set forth above when all monomer units included in the particulate polymer are taken to be 100 mass%, preservation stability of a functional layer can be improved.

[3] In the binder for a secondary battery functional layer according to the foregoing [1] or [2], it is preferable that the particulate polymer further includes a cross-linkable monomer unit, and proportional content of the cross-linkable monomer unit is more than 0 mass% and not more than 1.5 mass% when all monomer units included in the particulate polymer are taken to be 100 mass%.

When the proportional content of the cross-linkable monomer unit is not less than the lower limit set forth above when all monomer units included in the particulate polymer are taken to be 100 mass%, cycle characteristics of a secondary battery can be improved.

On the other hand, when the proportional content of the cross-linkable monomer unit is not more than the upper limit set forth above when all monomer units included in the particulate polymer are taken to be 100 mass%, adhesiveness of a functional layer can be improved.

[4] In the binder for a secondary battery functional layer according to any one of the foregoing [1] to [3], it is preferable that the particulate polymer further includes a cyano group-containing monomer unit, and proportional content of the cyano group-containing monomer unit is not less than 2 mass% and not more than 30 mass% when all monomer units included in the particulate polymer are taken to be 100 mass%.

When the proportional content of the cyano group-containing monomer unit is not less than the lower limit set forth above when all monomer units included in the particulate polymer are taken to be 100 mass%, adhesiveness of a functional layer can be improved.

On the other hand, when the proportional content of the cyano group-containing monomer unit is not more than the upper limit set forth above when all monomer units included in the particulate polymer are taken to be 100 mass%, cycle characteristics of a secondary battery can be improved.

[5] The binder for a secondary battery functional layer according to any one of the foregoing [1] to [4] preferably further comprises water and has a pH of not lower than 4 and not higher than 8.

When the pH of the binder for a secondary battery functional layer is within the range set forth above, preservation stability of a functional layer can be improved.

The pH of a binder for a secondary battery functional layer referred to in the present specification can be measured according to a method described in the EXAMPLES section.

[6] In the binder for a secondary battery functional layer according to any one of the foregoing [1] to [5], the particulate polymer preferably has a glass-transition temperature of 20°C or lower.

When the glass-transition temperature of the particulate polymer is not higher than the upper limit set forth above, adhesiveness of a functional layer can be improved.

The "glass-transition temperature" of a particulate polymer referred to in the present specification can be measured by a method described in the EXAMPLES section of the present specification.

[7] In the binder for a secondary battery functional layer according to any one of the foregoing [1] to [6], the particulate polymer preferably has a volume-average particle diameter of not less than 0.1 µm and not more than 0.2 µm.

When the volume-average particle diameter of the particulate polymer is not less than the lower limit set forth above, cycle characteristics of a secondary battery can be improved.

On the other hand, when the volume-average particle diameter of the particulate polymer is not more than the upper limit set forth above, adhesiveness of a functional layer can be improved.

The "volume-average particle diameter" referred to in the present specification represents the particle diameter at which, in a particle size distribution (by volume) measured by laser diffraction, cumulative volume calculated from a small diameter end of the distribution reaches 50%.

[8] In the binder for a secondary battery functional layer according to any one of the foregoing [1] to [7], the particulate polymer preferably has a degree of swelling in electrolyte solution of not less than ×3 and not more than ×5.

When the degree of swelling in electrolyte solution of the particulate polymer is not less than the lower limit set forth above, adhesiveness of a functional layer can be improved.

On the other hand, when the degree of swelling in electrolyte solution of the particulate polymer is not more than the upper limit set forth above, cycle characteristics of a secondary battery can be improved.

Note that the "degree of swelling in electrolyte solution" of a particulate polymer referred to in the present specification can be determined as a value (units: ×) that is obtained when a film (binder film) obtained through shaping of the particulate polymer is immersed in a prescribed non-aqueous electrolyte solution under specific conditions and then the weight of the film after immersion is divided by the weight of the film before immersion. Specifically, the "degree of swelling in electrolyte solution" can be measured by shaping a binder film by a method described in the EXAMPLES section of the present specification and then adopting a measurement method that is also described in the EXAMPLES section.

Moreover, with the aim of advantageously solving the problems set forth above, [9] a presently disclosed slurry composition for a secondary battery functional layer comprises: the binder for a secondary battery functional layer according to any one of the foregoing [1] to [8]; and functional particles.

With the slurry composition set forth above, it is possible to form a functional layer having excellent heat shrinkage resistance, adhesiveness, and preservation stability.

[10] In the slurry composition for a secondary battery functional layer according to the foregoing [9], the functional particles preferably include non-conductive particles.

The slurry composition for a secondary battery functional layer containing non-conductive particles as functional particles can suitably be used to form a porous membrane layer.

[11] In the slurry composition for a secondary battery functional layer according to the foregoing [10], a ratio of a volume-average particle diameter of the non-conductive particles relative to a volume-average particle diameter of the particulate polymer is preferably not less than ×2.0 and not more than ×7.0.

When the ratio of the volume-average particle diameter of the non-conductive particles relative to the volume-average particle diameter of the particulate polymer is not less than the lower limit set forth above, adhesiveness of a functional layer can be even further increased.

On the other hand, when the ratio of the volume-average particle diameter of the non-conductive particles relative to the volume-average particle diameter of the particulate polymer is not more than the upper limit set forth above, heat shrinkage resistance of a functional layer can be even further increased. Moreover, cycle characteristics of a secondary battery can be even further enhanced.

Furthermore, with the aim of advantageously solving the problems set forth above, [12] a presently disclosed functional layer for a secondary battery is formed using the slurry composition for a secondary battery functional layer according to any one of the foregoing [9] to [11].

The functional layer for a secondary battery set forth above has excellent heat shrinkage resistance, adhesiveness, and preservation stability.

Also, with the aim of advantageously solving the problems set forth above, [13] a presently disclosed secondary battery comprises the functional layer for a secondary battery according to the foregoing [12].

The secondary battery set forth above can display excellent battery characteristics.

### (Advantageous Effect)

According to the present disclosure, it is possible to provide a binder for a secondary battery functional layer that can form a functional layer having excellent heat shrinkage resistance, adhesiveness, and preservation stability.

Moreover, according to the present disclosure, it is possible to provide a slurry composition for a secondary battery functional layer that can form a functional layer having excellent heat shrinkage resistance, adhesiveness, and preservation stability.

Furthermore, according to the present disclosure, it is possible to provide a functional layer for a secondary battery having excellent heat shrinkage resistance, adhesiveness, and preservation stability.

Also, according to the present disclosure, it is possible to provide a secondary battery including this functional layer.

### DETAILED DESCRIPTION

The following provides a detailed description of embodiments of the present disclosure.

The presently disclosed binder for a secondary battery functional layer (hereinafter, also referred to simply as a "binder") can be used in an application of producing any functional layer having a function such as reinforcement or adhesion inside a secondary battery. For example, the presently disclosed binder can be used in production of the presently disclosed slurry composition for a secondary battery functional layer (hereinafter, also referred to simply as a "slurry composition"). Moreover, the presently disclosed slurry composition can be used in formation of a functional layer such as mentioned above. Furthermore, the presently disclosed functional layer for a secondary battery (hereinafter, also referred to simply as a "functional layer") is formed from the presently disclosed slurry composition. Also, the presently disclosed secondary battery includes the presently disclosed functional layer. For example, the presently disclosed secondary battery may include a positive electrode, a negative electrode, and a separator as battery members, wherein at least one of the aforementioned battery members includes the presently disclosed functional layer. In other words, the presently disclosed secondary battery includes a battery member that includes the presently disclosed functional layer.

### (Binder for secondary battery functional layer)

The presently disclosed binder contains a particulate polymer having a specific chemical composition and characteristic that are described in detail below. Note that the presently disclosed binder is normally a composition having the particulate polymer dispersed in a solvent such as water. Also note that the presently disclosed binder may further contain components other than the particulate polymer and the solvent (hereinafter, referred to as "other components").

### <Particulate polymer>

The particulate polymer is a component that functions as a binding material. The particulate polymer imparts adhesiveness to a functional layer that has been formed using a slurry composition containing the binder and holds components contained in the functional layer (for example, functional particles such as non-conductive particles) so that these components are not shed from the functional layer.

The particulate polymer includes an acidic functional group-containing monomer unit and a monomer unit of a reactive functional group-containing monomer including a functional group that can react with an acidic functional group (hereinafter, also referred to simply as a "reactive functional group-containing monomer"). The proportional content of the reactive functional group-containing monomer unit is not less than 7 mass% and not more than 30 mass% when all repeating units (all monomer units) included in the particulate polymer are taken to be 100 mass%. Note that the particulate polymer may optionally further include other monomer units in addition to the acidic functional group-containing monomer unit and the reactive functional group-containing monomer unit. Examples of such other monomer units include, but are not specifically limited to, a cyano group-containing monomer unit, a cross-linkable monomer unit, and a (meth)acrylic acid ester monomer unit.

In the case of the presently disclosed binder, a film that is formed of the particulate polymer after accelerated testing has an elastic modulus of 10 MPa or less.

The presently disclosed binder can impart excellent heat shrinkage resistance, adhesiveness, and preservation stability to a functional layer as a result of containing a particulate polymer that has the chemical composition and characteristic set forth above. Although the reason for this is not certain, it is presumed to be as follows.

Firstly, the particulate polymer in the presently disclosed binder is presumed to have excellent particle stability as a result of including an acidic functional group-containing monomer unit.

Moreover, the inclusion of a reactive functional group-containing monomer unit in the particulate polymer of the presently disclosed binder means that a reactive functional group is present at a particle surface, and this reactive functional group is presumed to form a cross-link or interact with the surface of a separator substrate (for example, a surface that has been hydrophilized through surface treatment) or with another component contained in a functional layer. Furthermore, when the proportion in which the particulate polymer includes a reactive functional group-containing monomer unit is set within the specific range set forth above, this is presumed to enable good formation of cross-links or interactions such as described above, to stabilize the layer structure of a functional layer, and, as a result, to improve heat shrinkage resistance and adhesiveness of the functional layer.

Also, accelerated testing of a particulate polymer refers to testing in which the particulate polymer is left at rest at 60°C for 14 days as subsequently described in the EXAMPLES section. When a film that is formed of a particulate polymer after such accelerated testing has an elastic modulus of 10 MPa or less, there is presumed to be a good state in terms of the number of cross-links (degree of cross-linking) or interactions with another component in a functional layer, which, in other words, means that preservation stability of the functional layer is improved due to the functional layer retaining a stable state.

The presently disclosed binder is presumed to be capable of imparting excellent heat shrinkage resistance, adhesiveness, and preservation stability to a functional layer for the reason set forth above.

### <<Elastic modulus of film formed of particulate polymer after accelerated testing>>

In the case of the presently disclosed binder, the elastic modulus of a film that is formed of the particulate polymer after accelerated testing is required to be 10 MPa or less, and is preferably 7 MPa or less, and more preferably 5 MPa or less.

When the elastic modulus of a film that is formed of the particulate polymer after accelerated testing is not more than any of the upper limits set forth above, preservation stability of a functional layer can be improved as previously described.

On the other hand, the elastic modulus of a film that is formed of the particulate polymer after accelerated testing is 0.1 MPa or more, for example, and may be 0.5 MPa or more, or may be 1 MPa or more.

Note that the elastic modulus of a film that is formed of the particulate polymer after accelerated testing can be adjusted by altering the types and amounts of monomers that are used.

### <<Elastic modulus of film formed of particulate polymer before accelerated testing>>

The elastic modulus of a film that is formed of the particulate polymer before accelerated testing is preferably 10 MPa or less, more preferably 7 MPa or less, even more preferably 5 MPa or less, and further preferably 3 MPa or less.

On the other hand, the elastic modulus of a film that is formed of the particulate polymer before accelerated testing is 0.1 MPa or more, for example, and may be 0.5 MPa or more, or may be 1 MPa or more.

### <<Chemical composition of particulate polymer>>

### [Acidic functional group-containing monomer unit]

Examples of acidic functional group-containing monomers that can form the acidic functional group-containing monomer unit include carboxyl group-containing monomers, sulfo group-containing monomers, and phosphate group-containing monomers.

Examples of carboxyl group-containing monomers include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, and α-chloro-β-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Moreover, an acid anhydride that produces a carboxyl group through hydrolysis can also be used as a carboxyl group-containing monomer.

Examples of sulfo group-containing monomers include vinyl sulfonic acid, methyl vinyl sulfonic acid, (meth)allyl sulfonic acid, (meth)acrylic acid 2-sulfoethyl, 2-acrylamido-2-methylpropane sulfonic acid, and 3-allyloxy-2-hydroxypropane sulfonic acid.

Note that in the present specification, "(meth)allyl" is used to indicate "allyl" and/or "methallyl" and "(meth)acryl" is used to indicate "acryl" and/or "methacryl".

Examples of phosphate group-containing monomers include 2-(meth)acryloyloxyethyl phosphate, methyl-2-(meth)acryloyloxyethyl phosphate, and ethyl-(meth)acryloyloxyethyl phosphate.

Note that in the present specification, "(meth)acryloyl" is used to indicate "acryloyl" and/or "methacryloyl".

One of the acidic functional group-containing monomers listed above may be used individually, or two or more of the acidic functional group-containing monomers listed above may be used in combination.

From a viewpoint of further improving particle stability of the particulate polymer, it is preferable to use a carboxyl group-containing monomer, more preferable to use a monocarboxylic acid, even more preferable to use at least one monomer among acrylic acid and methacrylic acid, and further preferable to use acrylic acid as an acidic functional group-containing monomer that can form the acidic functional group-containing monomer unit.

In other words, the particulate polymer preferably includes a carboxyl group-containing monomer unit, more preferably includes a monocarboxylic acid unit, even more preferably includes at least one monomer unit among an acrylic acid unit and a methacrylic acid unit, and further preferably includes an acrylic acid unit.

The proportional content of the acidic functional group-containing monomer unit when all repeating units (all monomer units) included in the particulate polymer are taken to be 100 mass% is preferably 0.1 mass% or more, and is preferably 1 mass% or less, more preferably 0.5 mass% or less, and even more preferably 0.2 mass% or less.

When the proportional content of the acidic functional group-containing monomer unit is not less than the lower limit set forth above when all monomer units included in the particulate polymer are taken to be 100 mass%, the particulate polymer is easy to produce, and preservation stability of a functional layer can be improved.

On the other hand, when the proportional content of the acidic functional group-containing monomer unit is not more than any of the upper limits set forth above when all monomer units included in the particulate polymer are taken to be 100 mass%, preservation stability of a functional layer can be improved.

### [Reactive functional group-containing monomer unit]

Examples of reactive functional group-containing monomers that can form the reactive functional group-containing monomer unit include cyclic ether group-containing monomers, hydroxy group-containing monomers, and amide group-containing monomers.

Any monomer that includes a cyclic ether group may be used without any specific limitations as a cyclic ether group-containing monomer. For example, a monomer that includes an epoxy group (epoxy ring) (i.e., an epoxy group-containing monomer), a monomer that includes an oxetanyl group (oxetane ring) (i.e., an oxetanyl group-containing monomer), or the like may be used. Of these cyclic ether group-containing monomers, it is preferable to use an epoxy group-containing monomer from a viewpoint of further improving heat shrinkage resistance and adhesiveness of a functional layer.

Examples of epoxy group-containing monomers include allyl glycidyl ether, glycidyl (meth)acrylate, 3,4-epoxycyclohexylmethyl methacrylate, and 4-hydroxybutyl acrylate glycidyl ether.

Examples of oxetanyl group-containing monomers include 3-((meth)acryloyloxymethyl)oxetane, 3-((meth)acryloyloxymethyl)-2-trifluoromethyloxetane, 3-((meth)acryloyloxymethyl)-2-phenyloxetane, 2-((meth)acryloyloxymethyl)oxetane, and 2-((meth)acryloyloxymethyl)-4-trifluoromethyloxetane.

Note that in the present specification, "(meth)acrylate" is used to indicate "acrylate" and/or "methacrylate".

Examples of hydroxy group-containing monomers include 2-hydroxyethyl (meth)acrylate and 2-hydroxypropyl (meth)acrylate.

Examples of amide group-containing monomers include N-vinylacetamide, (meth)acrylamide, dimethyl(meth)acrylamide, diethyl(meth)acrylamide, N-methoxymethyl(meth)acrylamide, and dimethylaminopropyl(meth)acrylamide.

Moreover, a monomer that includes two or more types of functional groups that can react with an acidic functional group can be used as a reactive functional group-containing monomer. For example, a monomer that includes a hydroxy group and an amide group can be used as a reactive functional group-containing monomer. Examples of monomers that include a hydroxy group and an amide group include N-methylol(meth)acrylamide and hydroxyethyl(meth)acrylamide.

Note that in the present specification, monomers that include a hydroxy group and an amide group are not included among hydroxy group-containing monomers or among amide group-containing monomers.

One of the reactive functional group-containing monomers listed above may be used individually, or two or more of the reactive functional group-containing monomers listed above may be used in combination.

From a viewpoint of further improving adhesiveness of a functional layer and particularly even further improving heat shrinkage resistance of a functional layer, it is preferable to use a cyclic ether group-containing monomer as a reactive functional group-containing monomer that can form the reactive functional group-containing monomer unit, with the use of an epoxy group-containing monomer being preferable, the use of at least one monomer among allyl glycidyl ether and glycidyl (meth)acrylate being more preferable, and the use of at least one monomer among allyl glycidyl ether and glycidyl methacrylate being even more preferable.

In other words, the particulate polymer preferably includes a cyclic ether group-containing monomer unit, more preferably includes an epoxy group-containing monomer unit, even more preferably includes at least one monomer unit among an allyl glycidyl ether unit and a glycidyl (meth)acrylate unit, and further preferably includes at least one monomer unit among an allyl glycidyl ether unit and a glycidyl methacrylate unit.

The proportional content of the reactive functional group-containing monomer unit when all repeating units (all monomer units) included in the particulate polymer are taken to be 100 mass% is required to be 7 mass% or more, and is preferably 10 mass% or more, more preferably 15 mass% or more, and even more preferably 18 mass% or more. Moreover, the proportional content of the reactive functional group-containing monomer unit when all repeating units (all monomer units) included in the particulate polymer are taken to be 100 mass% is required to be 30 mass% or less, and is preferably 25 mass% or less, more preferably 22 mass% or less, and even more preferably 20 mass% or less.

When the proportional content of the reactive functional group-containing monomer unit is not less than any of the lower limits set forth above when all monomer units included in the particulate polymer are taken to be 100 mass%, heat shrinkage resistance of a functional layer can be improved.

On the other hand, when the proportional content of the reactive functional group-containing monomer unit is not more than any of the upper limits set forth above when all monomer units included in the particulate polymer are taken to be 100 mass%, adhesiveness of a functional layer can be improved.

In one embodiment, it is preferable that the particulate polymer includes two or more types of reactive functional group-containing monomer units, and more preferable that the particulate polymer includes a cyclic ether group-containing monomer unit and a monomer unit that includes a hydroxy group and an amide group.

In a case in which the particulate polymer includes a cyclic ether group-containing monomer unit and a monomer unit that includes a hydroxy group and an amide group, the proportional content of the cyclic ether group-containing monomer unit when all repeating units (all monomer units) included in the particulate polymer are taken to be 100 mass% is preferably 6.9 mass% or more, more preferably 9.5 mass% or more, even more preferably 14.2 mass% or more, and further preferably 17 mass% or more, and is preferably 25 mass% or less, more preferably 22 mass% or less, even more preferably 19.5 mass% or less, and further preferably 18.5 mass% or less.

When the proportional content of the cyclic ether group-containing monomer unit is not less than any of the lower limits set forth above when all monomer units included in the particulate polymer are taken to be 100 mass%, heat shrinkage resistance of a functional layer can be further improved.

On the other hand, when the proportional content of the cyclic ether group-containing monomer unit is not more than any of the upper limits set forth above when all monomer units included in the particulate polymer are taken to be 100 mass%, adhesiveness of a functional layer can be further improved.

In a case in which the particulate polymer includes a cyclic ether group-containing monomer unit and a monomer unit that includes a hydroxy group and an amide group, the proportional content of the monomer unit including a hydroxy group and an amide group when all repeating units (all monomer units) included in the particulate polymer are taken to be 100 mass% is preferably 0.1 mass% or more, more preferably 0.5 mass% or more, even more preferably 0.8 mass% or more, and further preferably 1 mass% or more, and is preferably 5 mass% or less, more preferably 3 mass% or less, even more preferably 2.5 mass% or less, and further preferably 1.5 mass% or less.

When the proportional content of the monomer unit including a hydroxy group and an amide group is not less than any of the lower limits set forth above when all monomer units included in the particulate polymer are taken to be 100 mass%, heat shrinkage resistance of a functional layer can be further improved. Moreover, cycle characteristics of a secondary battery can be improved.

On the other hand, when the proportional content of the monomer unit including a hydroxy group and an amide group is not more than any of the upper limits set forth above when all monomer units included in the particulate polymer are taken to be 100 mass%, adhesiveness of a functional layer can be further improved.

In the particulate polymer, the proportional content of the reactive functional group-containing monomer unit is preferably higher than the proportional content of the acidic functional group-containing monomer unit.

When the proportional content of the reactive functional group-containing monomer unit is higher than the proportional content of the acidic functional group-containing monomer unit, heat shrinkage resistance and adhesiveness of a functional layer can be improved.

### [Cyano group-containing monomer unit]

In the present specification, cyano group-containing monomers that can form the cyano group-containing monomer unit are not included among acidic functional group-containing monomers and reactive functional group-containing monomers such as described above.

(Meth)acrylonitrile such as acrylonitrile or methacrylonitrile; an α-halogenoacrylonitrile such as α-chloroacrylonitrile or α-bromoacrylonitrile; 2-cyanoethyl (meth)acrylate such as 2-cyanoethyl acrylate or 2-cyanoethyl methacrylate; 2-cyanoethylacrylamide; or the like can be used as a cyano group-containing monomer. One of these cyano group-containing monomers may be used individually, or two or more of these cyano group-containing monomers may be used in combination in a freely selected ratio.

Note that in the present specification, "(meth)acrylonitrile" is used to indicate "acrylonitrile" and/or "methacrylonitrile".

From a viewpoint of further improving adhesiveness of a functional layer, it is preferable to use (meth)acrylonitrile, and more preferable to use acrylonitrile as a cyano group-containing monomer that can form the cyano group-containing monomer unit.

In other words, the particulate polymer preferably includes a (meth)acrylonitrile unit, and more preferably includes an acrylonitrile unit.

The proportional content of the cyano group-containing monomer unit when all repeating units (all monomer units) included in the particulate polymer are taken to be 100 mass% is preferably 2 mass% or more, more preferably 5 mass% or more, and even more preferably 8 mass% or more, and is preferably 30 mass% or less, more preferably 25 mass% or less, and even more preferably 15 mass% or less.

When the proportional content of the cyano group-containing monomer unit is not less than any of the lower limits set forth above when all monomer units included in the particulate polymer are taken to be 100 mass%, adhesiveness of a functional layer can be improved.

On the other hand, when the proportional content of the cyano group-containing monomer unit is not more than any of the upper limits set forth above when all monomer units included in the particulate polymer are taken to be 100 mass%, an increase of internal resistance of a secondary battery can be suppressed, and cycle characteristics of the secondary battery can be improved.

### [Cross-linkable monomer unit]

A cross-linkable monomer that can form the cross-linkable monomer unit is a monomer that can form a cross-linked structure during or after polymerization through heating or irradiation with energy rays.

In the present specification, cross-linkable monomers are not included among acidic functional group-containing monomers, reactive functional group-containing monomers, and cyano group-containing monomers such as described above.

A polyfunctional monomer that includes two or more groups displaying polymerization reactivity in the monomer, for example, may be used as a cross-linkable monomer. Examples of such polyfunctional monomers include divinyl monomers such as divinylbenzene, 1,3-butadiene, isoprene, and allyl methacrylate; di(meth)acrylic acid alkyl ester monomers such as ethylene dimethacrylate, diethylene glycol dimethacrylate, ethylene glycol dimethacrylate (EDMA), diethylene glycol diacrylate, and 1,3-butylene glycol diacrylate; and tri(meth)acrylic acid alkyl ester monomers such as trimethylolpropane trimethacrylate and trimethylolpropane triacrylate. One of these polyfunctional monomers may be used individually, or two or more of these polyfunctional monomers may be used in combination.

From a viewpoint of improving heat shrinkage resistance of a functional layer, it is preferable to use at least one monomer among allyl methacrylate and ethylene glycol dimethacrylate as a cross-linkable monomer that can form the cross-linkable monomer unit. Moreover, it is more preferable to use allyl methacrylate as a cross-linkable monomer that can form the cross-linkable monomer unit because this can improve heat shrinkage resistance of a functional layer and can also improve cycle characteristics of a secondary battery.

In other words, the particulate polymer preferably includes at least one monomer unit among an allyl methacrylate unit and an ethylene glycol dimethacrylate unit, and preferably includes an allyl methacrylate unit.

The proportional content of the cross-linkable monomer unit when all repeating units (all monomer units) included in the particulate polymer are taken to be 100 mass% is preferably more than 0 mass%, and more preferably 0.3 mass% or more, and is preferably 1.5 mass% or less, and more preferably 0.8 mass% or less.

When the proportional content of the cross-linkable monomer unit is not less than any of the lower limits set forth above when all monomer units included in the particulate polymer are taken to be 100 mass%, cycle characteristics of a secondary battery can be improved.

On the other hand, when the proportional content of the cross-linkable monomer unit is not more than any of the upper limits set forth above when all monomer units included in the particulate polymer are taken to be 100 mass%, adhesiveness of a functional layer can be improved.

### [(Meth)acrylic acid ester monomer unit]

In the present specification, (meth)acrylic acid ester monomers that can form the (meth)acrylic acid ester monomer unit are not included among acidic functional group-containing monomers, reactive functional group-containing monomers, cyano group-containing monomers, and cross-linkable monomers such as previously described.

Although a (meth)acrylic acid alkyl ester monomer, a (meth)acrylic acid aryl ester monomer, or the like may be used as a (meth)acrylic acid ester monomer, a (meth)acrylic acid alkyl ester monomer is preferable from a viewpoint of improving adhesiveness of a functional layer.

Examples of (meth)acrylic acid alkyl ester monomers include acrylic acid alkyl esters such as methyl acrylate, ethyl acrylate, n-propyl acrylate, isopropyl acrylate, n-butyl acrylate, t-butyl acrylate, isobutyl acrylate, n-pentyl acrylate, isopentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, n-butyl methacrylate, t-butyl methacrylate, isobutyl methacrylate, n-pentyl methacrylate, isopentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, stearyl methacrylate, and glycidyl methacrylate. One of these (meth)acrylic acid alkyl ester monomers may be used individually, or two or more of these (meth)acrylic acid alkyl ester monomers may be used in combination.

From a viewpoint of further improving adhesiveness of a functional layer and also improving heat shrinkage resistance of the functional layer, it is preferable to use at least one monomer among 2-ethylhexyl acrylate and butyl acrylate as a (meth)acrylic acid alkyl ester monomer.

In other words, the particulate polymer preferably includes at least one monomer unit among a 2-ethylhexyl acrylate unit and a butyl acrylate unit.

The proportional content of the (meth)acrylic acid ester monomer unit when all repeating units (all monomer units) included in the particulate polymer are taken to be 100 mass% is preferably 40 mass% or more, more preferably 50 mass% or more, and even more preferably 60 mass% or more, and is preferably 90 mass% or less, more preferably 80 mass% or less, and even more preferably 75 mass% or less.

When the proportional content of the (meth)acrylic acid ester monomer unit is not less than any of the lower limits set forth above when all monomer units included in the particulate polymer are taken to be 100 mass%, adhesiveness of a functional layer can be improved.

On the other hand, when the proportional content of the (meth)acrylic acid ester monomer unit is not more than any of the upper limits set forth above when all monomer units included in the particulate polymer are taken to be 100 mass%, heat shrinkage resistance of a functional layer can be improved. Moreover, cycle characteristics of a secondary battery can be improved.

### <<Glass-transition temperature of particulate polymer>>

The glass-transition temperature of the particulate polymer is preferably 20°C or lower, more preferably 10°C or lower, and even more preferably 0°C or lower.

When the glass-transition temperature of the particulate polymer is not higher than any of the upper limits set forth above, adhesiveness of a functional layer can be improved.

On the other hand, the lower limit for the glass-transition temperature of the particulate polymer is not specifically limited, but is normally -100°C or higher.

### <<Degree of swelling in electrolyte solution of particulate polymer>>

The degree of swelling in electrolyte solution of the particulate polymer is preferably ×3 or more, and more preferably ×3.5 or more, and is preferably ×5 or less, and more preferably ×4.5 or less.

When the degree of swelling in electrolyte solution of the particulate polymer is not less than any of the lower limits set forth above, adhesiveness of a functional layer can be improved.

On the other hand, when the degree of swelling in electrolyte solution of the particulate polymer is not more than any of the upper limits set forth above, an increase of internal resistance of a secondary battery can be suppressed, and cycle characteristics of the secondary battery can be improved.

The degree of swelling in electrolyte solution of the particulate polymer can be adjusted by altering the types and amounts of monomers that are used and the conditions of the polymerization reaction (for example, polymerization temperature and polymerization reaction time).

### <<Volume-average particle diameter of particulate polymer>>

The volume-average particle diameter of the particulate polymer is preferably 0.1 µm or more, and more preferably 0.12 µm or more, and is preferably 0.2 µm or less, and more preferably 0.18 µm or less.

When the volume-average particle diameter of the particulate polymer is not less than any of the lower limits set forth above, cycle characteristics of a secondary battery can be improved.

On the other hand, when the volume-average particle diameter of the particulate polymer is not more than any of the upper limits set forth above, adhesiveness of a functional layer can be improved.

### <<Structure of particulate polymer>>

Although the structure of the particulate polymer may be that of a block copolymer, a graft copolymer, a random copolymer, or the like without any specific limitations, it is preferable that the particulate polymer is a random copolymer.

Moreover, although the particulate polymer may have a core-shell structure including a core portion and a shell portion that at least partially covers an outer surface of the core portion, it is preferable that the particulate polymer does not have a core-shell structure.

Accordingly, the particulate polymer is particularly preferably a random copolymer that does not have a core-shell structure.

Note that in the present specification, a particulate polymer is judged to "be a random copolymer not having a core-shell structure" when only one glass-transition temperature is detected in glass-transition temperature measurement of the particulate polymer.

### <<Production of particulate polymer>>

The particulate polymer can be produced by polymerizing a monomer composition that contains the monomers described above.

The proportional content of each monomer in the monomer composition is normally set as the same as the desired proportional content of each monomer unit in the particulate polymer.

Although solution polymerization, suspension polymerization, bulk polymerization, emulsion polymerization, or the like, for example, may be adopted as the polymerization method of the particulate polymer without any specific limitations, emulsion polymerization is preferable because this enables simple adjustment of the volume-average particle diameter, etc. of the particulate polymer. Addition polymerization such as ionic polymerization, radical polymerization, or living radical polymerization can be adopted as the polymerization reaction. Moreover, commonly used emulsifiers, dispersants, polymerization initiators, polymerization aids, and so forth can be used in the polymerization in an amount that is also the same as commonly used.

In polymerization of the particulate polymer, it is preferable that at any timing from the start of polymerization to the end of polymerization, the polymerization temperature is lowered relative to the polymerization temperature at the start of polymerization and that polymerization is ended. In particular, the polymerization temperature at the end point of polymerization is preferably at least 10°C lower, and more preferably at least 15°C lower than the temperature at the start of polymerization. Moreover, once the polymerization temperature is lowered, a reductant such as ascorbic acid may be added.

### <Solvent>

Any known solvent in which the above-described particulate polymer can be dispersed can be used as a solvent that can be contained in the presently disclosed binder. In particular, it is preferable to use water as the solvent. Note that at least a portion of the solvent that can be contained in the binder can be a polymerization solvent that was used in production of the particulate polymer, but is not specifically limited thereto.

### <Solid content of binder for secondary battery functional layer>

The solid content (particulate polymer, etc.) of the binder is preferably 30 mass% or more, and more preferably 35 mass% or more, and is preferably 50 mass% or less, and more preferably 45 mass% or less.

When the solid content of the binder is not less than any of the lower limits set forth above, particle stability of the particulate polymer can be improved, and, as a result, preservation stability of a functional layer can be improved.

On the other hand, when the solid content of the binder is not more than any of the upper limits set forth above, excessively high contact frequency of particles can be suppressed, and preservation stability of a functional layer can be improved.

### <pH of binder for secondary battery functional layer>

The pH of the binder in a case in which the solvent is water is preferably 4 or higher, and more preferably 5 or higher, and is preferably 8 or lower, and more preferably 7 or lower.

When the pH of the binder is within any of the ranges set forth above, preservation stability of a functional layer can be improved.

### <Production of binder for secondary battery functional layer>

No specific limitations are placed on the method by which the presently disclosed binder is produced. For example, in a case in which production of the particulate polymer is performed in a solvent such as water to yield the particulate polymer as a dispersion liquid, the dispersion liquid of the particulate polymer may be used in that form as the binder, or other components may optionally be added to the dispersion liquid of the particulate polymer to obtain the binder. Examples of such other components include "Other components" that are subsequently described in the "Slurry composition for secondary battery functional layer" section.

### (Slurry composition for secondary battery functional layer)

The presently disclosed slurry composition is a composition that can be used in an application of forming a functional layer, that contains the binder described above and functional particles, and that optionally further contains other components. In other words, the slurry composition normally contains a particulate polymer, a solvent, and functional particles and optionally further contains other components. Moreover, as a result of the presently disclosed slurry composition containing the binder set forth above, it is possible to obtain a functional layer having excellent heat shrinkage resistance, adhesiveness, and preservation stability by drying the presently disclosed slurry composition on a substrate, for example.

### <Binder>

The presently disclosed binder set forth above is used as a binder.

No specific limitations are placed on the amount of the binder that is compounded in the slurry composition. The amount of the binder that is compounded in the slurry composition is preferably 1 part by mass or more, and more preferably 1.5 parts by mass or more in terms of solid content relative to 100 parts by mass of the functional particles, and is preferably 6 parts by mass or less, and more preferably 3 parts by mass or less in terms of solid content relative to 100 parts by mass of the functional particles.

When the amount of the binder that is compounded in the slurry composition is not less than any of the lower limits set forth above, adhesiveness of a functional layer can be improved.

On the other hand, when the amount of the binder that is compounded in the slurry composition is not more than any of the upper limits set forth above, heat shrinkage resistance of a functional layer can be improved.

### <Functional particles>

In a case in which the functional layer is a porous membrane layer, for example, non-conductive particles can be used as functional particles for causing the functional layer to display an expected function.

In particular, in a case in which the presently disclosed slurry composition contains non-conductive particles as the functional particles, a functional layer that is formed using the presently disclosed slurry composition has excellent heat shrinkage resistance, and thus the presently disclosed slurry composition can suitably be used in an application of forming a porous membrane layer that improves heat resistance and strength of a battery member.

### <<Non-conductive particles>>

Although both inorganic fine particles and organic fine particles can be used without any specific limitations as non-conductive particles that can be used in a porous membrane layer of a secondary battery, inorganic fine particles are typically used. In particular, the material of the non-conductive particles is preferably an electrochemically stable material that is present stably in the environment of use of a secondary battery. Examples of materials of non-conductive particles that are preferable from such viewpoints include particles of oxides such as aluminum oxide (alumina), hydrous aluminum oxide (boehmite), silicon oxide, magnesium oxide (magnesia), calcium oxide, titanium oxide (titania), BaTiO₃, ZrO, and alumina-silica complex oxide; particles of nitrides such as aluminum nitride and boron nitride; particles of covalently bonded crystals such as silicon and diamond; particles of sparingly soluble ionic crystals such as barium sulfate, calcium fluoride, and barium fluoride; and fine particles of clay such as talc and montmorillonite. These particles may be subjected to element substitution, surface treatment, solid solution treatment, and/or the like as necessary.

From a viewpoint of inhibiting aggregation and increasing dispersibility of the slurry composition, it is preferable to use non-conductive particles of one or more selected from the group consisting of alumina, boehmite, and barium sulfate, and more preferable to use non-conductive particles of at least one among alumina and barium sulfate as the material of the non-conductive particles.

One of these types of non-conductive particles may be used individually, or two or more of these types of non-conductive particles may be used in combination.

The volume-average particle diameter of the non-conductive particles is preferably 0.1 µm or more, and more preferably 0.3 µm or more, and is preferably 1.5 µm or less, and more preferably 1.0 µm or less.

When the volume-average particle diameter of the non-conductive particles is not less than any of the lower limits set forth above, adhesiveness of a functional layer can be improved.

On the other hand, when the volume-average particle diameter of the non-conductive particles is not more than any of the upper limits set forth above, electrolyte solution injectability of a functional layer can be improved due to increased air permeability of the functional layer, and, as a result, cycle characteristics of a secondary battery can be improved.

A ratio of the volume-average particle diameter of the non-conductive particles relative to the volume-average particle diameter of the particulate polymer (volume-average particle diameter of non-conductive particles/volume-average particle diameter of particulate polymer) is preferably ×2.0 or more, and more preferably ×2.5 or more, and is preferably ×7.0 or less, and more preferably ×5.0 or less.

When the ratio of the volume-average particle diameter of the non-conductive particles relative to the volume-average particle diameter of the particulate polymer is not less than any of the lower limits set forth above, adhesiveness of a functional layer can be even further increased.

On the other hand, when the ratio of the volume-average particle diameter of the non-conductive particles relative to the volume-average particle diameter of the particulate polymer is not more than any of the upper limits set forth above, heat shrinkage resistance of a functional layer can be even further increased. Moreover, cycle characteristics of a secondary battery can be even further enhanced.

### <Other components>

Besides the components described above, the slurry composition may further contain other components. No specific limitations are placed on these other components so long as they do not have an excessively negative influence on battery reactions in a secondary battery that includes a functional layer. Moreover, one type of other component may be used, or two or more types of other components may be used.

Examples of other components include surfactants, wetting agents, leveling agents, dispersants, electrolyte solution decomposition inhibitors, and viscosity modifiers.

### <<Viscosity modifier>>

From a viewpoint of further improving heat shrinkage resistance of a functional layer, it is preferable that a viscosity modifier is used as another component. Moreover, it is particularly preferable that a water-soluble polymer is used as the viscosity modifier.

Note that when a polymer is said to "be water-soluble" in the present specification, this means that when 0.5 g of the polymer is dissolved in 100 g of water at a temperature of 25°C, insoluble content is less than 1 mass%.

Although no specific limitations are placed on the water-soluble polymer, it is preferable to use at least one water-soluble polymer among carboxymethyl cellulose and polyacrylamide from a viewpoint of even further improving heat shrinkage resistance of a functional layer.

No specific limitations are placed on the amount of the viscosity modifier that is compounded in the slurry composition. The amount of the water-soluble polymer that is compounded in the slurry composition is preferably 0.1 parts by mass or more, and more preferably 0.5 parts by mass or more in terms of solid content relative to 100 parts by mass of the functional particles, and is preferably 3 parts by mass or less, and more preferably 2 parts by mass or less in terms of solid content relative to 100 parts by mass of the functional particles.

When the amount of the viscosity modifier that is compounded in the slurry composition is not less than any of the lower limits set forth above, heat shrinkage resistance of a functional layer can be even further improved.

On the other hand, when the amount of the viscosity modifier that is compounded in the slurry composition is not more than any of the upper limits set forth above, sufficiently high coating stability can be ensured when the slurry composition is coated onto a substrate to form a functional layer.

### <<Dispersant>>

From a viewpoint of improving stability in the slurry composition, it is preferable that a dispersant is used as another component. Sodium polyacrylate, a sodium salt of an acrylic acid/sulfonic acid monomer copolymer, or the like, for example, can be used as the dispersant without any specific limitations. Note that the dispersant is a different component to the previously described viscosity modifier (water-soluble polymer, etc.).

No specific limitations are placed on the amount of the dispersant that is compounded in the slurry composition. The amount of the dispersant that is compounded in the slurry composition is preferably 0.1 parts by mass or more, and more preferably 0.3 parts by mass or more in terms of solid content relative to 100 parts by mass of the functional particles, and is preferably 3 parts by mass or less, and more preferably 2 parts by mass or less in terms of solid content relative to 100 parts by mass of the functional particles.

When the amount of the dispersant that is compounded in the slurry composition is not less than any of the lower limits set forth above, stability of the slurry composition can be further improved.

On the other hand, when the amount of the dispersant that is compounded in the slurry composition is not more than any of the upper limits set forth above, sufficiently high coating stability can be ensured when the slurry composition is coated onto a substrate to form a functional layer.

### <<Surfactant>>

From a viewpoint of improving coatability of the slurry composition, it is preferable that a surfactant is used as another component. A polyethylene glycol type surfactant, for example, can be used as the surfactant without any specific limitations. Note that the surfactant is a different component to the previously described viscosity modifier (water-soluble polymer, etc.) and dispersant.

No specific limitations are placed on the amount of the surfactant that is compounded in the slurry composition. The amount of the surfactant that is compounded in the slurry composition is preferably 0.05 parts by mass or more, and more preferably 0.1 parts by mass or more in terms of solid content relative to 100 parts by mass of the functional particles, and is preferably 0.5 parts by mass or less, and more preferably 0.3 parts by mass or less in terms of solid content relative to 100 parts by mass of the functional particles.

When the amount of the surfactant that is compounded in the slurry composition is not less than any of the lower limits set forth above, coatability of the slurry composition onto a substrate can be sufficiently ensured.

On the other hand, when the amount of the surfactant that is compounded in the slurry composition is not more than any of the upper limits set forth above, sufficiently high adhesiveness of a functional layer can be ensured.

### <Solid content of slurry composition for secondary battery functional layer>

The solid content (particulate polymer, functional particles, other components, etc.) of the slurry composition is preferably 20 mass% or more, and more preferably 30 mass% or more, and is preferably 60 mass% or less, and more preferably 50 mass% or less.

When the solid content of the slurry composition is within any of the ranges set forth above, suitable viscosity of the slurry composition can be maintained, and coating stability of the slurry composition can be improved.

### <Production of slurry composition for secondary battery functional layer>

No specific limitations are placed on the method by which the slurry composition is produced.

For example, in a case in which the slurry composition is a slurry composition for a porous membrane layer, the slurry composition can be produced by mixing the binder, the non-conductive particles, and other components that are used as necessary in the presence of the solvent.

Note that a solvent (for example, water) that was previously described in the "Binder for secondary battery functional layer" section can be used as the solvent that is used in production of the slurry composition. Moreover, the solvent that is used in production of the slurry composition also includes the solvent that was contained in the binder. No specific limitations are placed on the mixing method, and mixing can be performed using a typically used stirrer or disperser.

### (Functional layer for secondary battery)

The presently disclosed functional layer is a layer having a function such as reinforcement or adhesion inside a secondary battery and may, for example, be a porous membrane layer that improves heat resistance and strength. Moreover, the presently disclosed functional layer is a layer that is formed from the presently disclosed slurry composition set forth above. For example, the presently disclosed functional layer can be formed by applying the slurry composition set forth above onto the surface of a suitable substrate to form a coating film and subsequently drying the coating film that has been formed. In other words, the presently disclosed functional layer is formed of a dried product of the slurry composition set forth above, normally contains at least a particulate polymer and functional particles, and optionally further contains other components. Note that components contained in the functional layer are components that were contained in the slurry composition set forth above, and thus the preferred ratio of these components is the same as the preferred ratio of the components in the slurry composition.

The presently disclosed functional layer has excellent heat shrinkage resistance, adhesiveness, and preservation stability as a result of being formed from the presently disclosed slurry composition containing the presently disclosed binder.

### <Substrate>

No limitations are placed on the substrate onto which the slurry composition is applied. For example, a coating film of the slurry composition may be formed on the surface of a releasable substrate, this coating film may be dried to form a functional layer, and then the releasable substrate may be peeled from the functional layer. The functional layer that is peeled from the releasable substrate in this manner can be used as a free-standing film in formation of a battery member of a secondary battery.

However, it is preferable that a separator substrate or an electrode substrate is used as the substrate from a viewpoint of raising battery member production efficiency since a step of peeling the functional layer can be omitted. Specifically, it is preferable that the functional layer is formed by applying the slurry composition onto a separator substrate or an electrode substrate.

Moreover, the surface of the substrate such as the separator substrate or the electrode substrate may be subjected to surface treatment such as corona treatment or plasma treatment so as to hydrophilize the surface from a viewpoint of increasing adhesiveness between the formed functional layer and the substrate.

### <<Separator substrate>>

The separator substrate may be a known separator substrate such as an organic separator substrate without any specific limitations. The organic separator substrate is a porous member that is formed of an organic material. Examples of organic separator substrates include microporous membranes, non-woven fabrics, and so forth that contain a polyolefin resin such as polyethylene or polypropylene, an aromatic polyamide resin, or the like, with a microporous membrane or non-woven fabric made of polyethylene being preferable due to the excellent strength thereof.

### <<Electrode substrate>>

The electrode substrate (positive electrode substrate or negative electrode substrate) is not specifically limited and may be an electrode substrate having an electrode mixed material layer that contains electrode active material particles and a binding material formed on a current collector.

A material having electrical conductivity and electrochemical durability is used as the current collector. Specifically, the current collector may, for example, be made of iron, copper, aluminum, nickel, stainless steel, titanium, tantalum, gold, platinum, or the like. Of these materials, copper foil is particularly preferable as a current collector used for a negative electrode. On the other hand, aluminum foil is particularly preferable as a current collector used for a positive electrode. One of these materials may be used individually, or two or more of these materials may be used in combination in a freely selected ratio.

Known electrode active material particles can be used without any specific limitations as the electrode active material particles that are contained in the electrode mixed material layer of the electrode substrate. Moreover, any binding material that is used for electrode mixed material layers can be used as the binding material that is contained in the electrode mixed material layer of the electrode substrate.

### <Formation method of functional layer for secondary battery>

Examples of methods by which the functional layer may be formed on a substrate such as the separator substrate or the electrode substrate described above include:
(1) a method in which the presently disclosed slurry composition is applied onto the surface of the substrate (surface at the electrode mixed material layer-side in the case of the electrode substrate; same applies below) and is then dried;
(2) a method in which the substrate is immersed in the presently disclosed slurry composition and is then dried; and
(3) a method in which the presently disclosed slurry composition is applied onto a releasable substrate and is dried to produce a functional layer that is then transferred onto the surface of the substrate.

Of these methods, method (1) is particularly preferable since it allows simple control of the thickness of the functional layer. In more detail, method (1) includes a step of applying the slurry composition onto the substrate (application step) and a step of drying the slurry composition that has been applied onto the substrate to form a functional layer (drying step).

### <<Application step>>

Examples of methods by which the slurry composition can be applied onto the substrate in the application step include, but are not specifically limited to, doctor blading, reverse roll coating, direct roll coating, gravure coating, extrusion coating, and brush coating.

### <<Drying step>>

The slurry composition on the substrate can be dried by any commonly known method in the drying step without any specific limitations. Examples of drying methods that may be used include drying by warm, hot, or low-humidity air, drying in a vacuum, and drying through irradiation with infrared light, electron beams, or the like. Although no specific limitations are placed on the drying conditions, the drying temperature is preferably 40°C to 150°C, and the drying time is preferably 2 minutes to 30 minutes.

The thickness of the formed functional layer is preferably 1 µm or more, and more preferably 1.5 µm or more, and is preferably 4 µm or less, and more preferably 3 µm or less.

When the thickness of the functional layer is not less than any of the lower limits set forth above, sufficiently high heat shrinkage resistance of the functional layer can be ensured.

On the other hand, when the thickness of the functional layer is not more than any of the upper limits set forth above, internal resistance of a secondary battery can be reduced due to thickness reduction of the functional layer, and, as a result, cycle characteristics of the secondary battery can be improved.

### (Battery member including functional layer for secondary battery)

A battery member (separator or electrode) that includes the functional layer may include constituent elements other than the presently disclosed functional layer and the substrate described above so long as the effects according to the present disclosure are not significantly lost. Although no specific limitations are placed on such constituent elements, examples thereof include a porous membrane layer that does not correspond to the presently disclosed functional layer. Moreover, another example of a layer that does not correspond to the presently disclosed functional layer is a layer that contains the above-described particulate polymer and optionally contains other components, etc., but that does not contain functional particles. Such a layer is also referred to as an adhesive layer.

A battery member including presently disclosed functional layer has excellent heat shrinkage resistance, adhesiveness, and preservation stability and can adhere well to an adjacent battery member.

### (Secondary battery)

The presently disclosed secondary battery is a secondary battery that includes the presently disclosed functional layer set forth above. More specifically, the presently disclosed secondary battery includes a positive electrode, a negative electrode, a separator, and an electrolyte solution, wherein the functional layer for a secondary battery set forth above is included in at least one battery member among the positive electrode, the negative electrode, and the separator.

Note that inclusion of the presently disclosed functional layer having excellent heat shrinkage resistance, adhesiveness, and preservation stability in the presently disclosed secondary battery results in the presently disclosed secondary battery having excellent battery characteristics such as cycle characteristics due to there being a low heat shrinkage rate caused by temperature change, good adhesion between battery members, and low tendency for heat shrinkage resistance and adhesiveness to decrease even after a long time has passed.

### <Positive electrode, negative electrode, and separator>

At least one of the positive electrode, the negative electrode, and the separator that are used in the presently disclosed secondary battery is a battery member that includes the presently disclosed functional layer set forth above. Note that a known positive electrode, negative electrode, or separator can be used without any specific limitations as a positive electrode, negative electrode, or separator that does not include the presently disclosed functional layer.

### <Electrolyte solution>

The electrolyte solution is normally an organic electrolyte solution obtained by dissolving a supporting electrolyte in an organic solvent. The supporting electrolyte may, for example, be a lithium salt in the case of a lithium ion secondary battery. Examples of lithium salts that can be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable as they readily dissolve in solvents and exhibit a high degree of dissociation. One electrolyte may be used individually, or two or more electrolytes may be used in combination. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used in a lithium ion secondary battery, for example, include carbonates such as dimethyl carbonate (DMC), ethylene carbonate (EC), diethyl carbonate (DEC), propylene carbonate (PC), butylene carbonate (BC), ethyl methyl carbonate (EMC), and vinylene carbonate (VC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution can be adjusted as appropriate. Furthermore, known additives may be added to the electrolyte solution.

### <Production method of secondary battery>

The presently disclosed secondary battery set forth above can be produced by, for example, stacking the positive electrode and the negative electrode with the separator in-between, performing rolling, folding, or the like of the resultant laminate, as necessary, to place the laminate in a battery container, injecting the electrolyte solution into the battery container, and sealing the battery container. Note that at least one member among the positive electrode, the negative electrode, and the separator is a battery member that includes the presently disclosed functional layer. In addition, an expanded metal; an overcurrent preventing device such as a fuse or a PTC device; a lead plate; or the like may be placed in the battery container as necessary in order to prevent pressure increase inside the battery and occurrence of overcharging or overdischarging. The shape of the battery may be a coin type, a button type, a sheet type, a cylinder type, a prismatic type, a flat type, or the like, for example.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion constituted by a repeating unit (monomer unit) that is formed through polymerization of a given monomer in the polymer is normally, unless otherwise specified, the same as the ratio (charging ratio) of the given monomer among all monomers used in polymerization of the polymer.

Measurements and evaluations of various attributes in the examples and comparative examples were performed according to the following methods.

### <Volume-average particle diameter of particulate polymer>

The volume-average particle diameter of a particulate polymer was measured by laser diffraction.

Specifically, a produced water dispersion containing a particulate polymer (adjusted to a solid content of 0.1 mass%) was first taken as a sample. In a particle diameter distribution (by volume) measured using a laser diffraction particle size analyzer (produced by Beckman Coulter, Inc.; product name: LS-13 320), the particle diameter D50 at which cumulative volume calculated from a small diameter end of the distribution reached 50% was determined as the volume-average particle diameter.

### <Glass-transition temperature of particulate polymer>

A produced dispersion liquid containing a particulate polymer was subjected to preliminary drying in an environment having a relative humidity of 50% and a temperature of 23°C to 26°C for 3 days to perform preliminary film formation with a thickness of 2 ± 0.5 mm. The film obtained through preliminary film formation was then dried in a vacuum dryer having a temperature of 120°C for 10 hours. Thereafter, the dried film was taken as a sample, and the glass-transition temperature (°C) was measured in accordance with JIS K7121 under conditions of a measurement temperature of -100°C to 180°C and a heating rate of 5°C/min using a differential scanning calorimeter (DSC7200 produced by SII).

### <Degree of swelling in electrolyte solution>

A produced water dispersion containing a particulate polymer was dried in an environment having a relative humidity of 50% and a temperature of 23°C to 25°C to form a film with a thickness of approximately 0.1 mm. The formed film was cut out as approximately 2 cm-square, and the weight thereof (pre-immersion weight) was measured. Thereafter, the film was immersed in electrolyte solution having a temperature of 60°C for 72 hours. The immersed film was then pulled out of the electrolyte solution, electrolyte solution was wiped off, and the weight of the film (post-immersion weight) was promptly measured. A value of (post-immersion weight)/(pre-immersion weight) × 100(%) was taken to be the degree of swelling in electrolyte solution. Note that a solution obtained by dissolving LiPF₆ with a concentration of 1 mol/L in a mixed solvent of ethylene carbonate and ethyl methyl carbonate in a weight ratio of 3:7 was used as the electrolyte solution.

### <Measurement of pH of binder>

The pH of a produced water dispersion (binder) containing a particulate polymer was measured using a pH Meter F-21 produced by Horiba, Ltd. at 25°C after calibration of a glass electrode had been performed using buffer solutions of pH 4, pH 7, and pH 9.

### <Elastic modulus of film formed of particulate polymer after accelerated testing>

A produced water dispersion containing a particulate polymer was left at rest at 60°C for 14 days to perform accelerated testing thereof. The water dispersion containing the particulate polymer after accelerated testing was air dried at a relative humidity of 50% and a temperature of 25°C to prepare a film. A 2 µm slice of the obtained film was obtained using a microtome. Measurement of film elastic modulus was performed with respect to the obtained slice in FV mode of an atomic force microscope (AFM). A median value among the measurement results was taken as an evaluation result. Note that the instrument (atomic force microscope) was a FastScan (product name) produced by Bruker Corporation.

### <Elastic modulus of film formed of particulate polymer before accelerated testing>

A water dispersion containing a particulate polymer that had not yet been subjected to the accelerated testing described above was air dried at a relative humidity of 50% and a temperature of 25°C to prepare a film. A 2 µm slice of the obtained film was obtained using a microtome. Measurement of film elastic modulus was performed with respect to the obtained slice in FV mode of an atomic force microscope (AFM). A median value among the measurement results was taken as an evaluation result. Note that the instrument (atomic force microscope) was a FastScan (product name) produced by Bruker Corporation.

### <Adhesiveness of functional layer for secondary battery>

A functional layer-equipped separator produced in each example or comparative example was cut out as 10 mm in width and 50 mm in length to obtain a test specimen.

Next, a stainless steel plate having double-sided tape (No. 5608 produced by Nitto Denko Corporation) affixed thereto was prepared, and the surface of a functional layer of the test specimen was affixed to this double-sided tape. The strength when one end of the separator substrate was pulled and peeled off at a speed of 50 mm/min with the peeling surface at 180° was measured, and the adhesiveness of the functional layer was evaluated in accordance with the following standard. A larger peel strength indicates better adhesiveness.
A: Peel strength of 15 N/m or more
B: Peel strength of not less than 5 N/m and less than 15 N/m
C: Peel strength of less than 5 N/m

### <Heat shrinkage resistance of functional layer for secondary battery>

A functional layer-equipped separator produced in each example or comparative example was cut out as a square having a side length of 12 cm, and then a square having a side length of 10 cm was drawn in an inner part of the cut-out square to obtain a test specimen. The test specimen was placed in a 150°C constant-temperature tank and was left in the constant-temperature tank for 1 hour. Thereafter, the change of area of the square drawn in the inner part of the test specimen was determined (= {(area of square before being left - area of square after being left)/area of square before being left} × 100%) as a heat shrinkage rate and was evaluated by the following standard. A smaller heat shrinkage rate indicates that the functional layer has better heat shrinkage resistance.
A: Heat shrinkage rate of less than 10%
B: Heat shrinkage rate of not less than 10% and less than 20%
C: Heat shrinkage rate of 20% or more

### <Preservation stability of secondary battery functional layer>

A functional layer-equipped separator produced in each example or comparative example was left at rest in a 40°C constant-temperature tank for 90 days. Thereafter, the adhesiveness and heat shrinkage resistance of the functional layer-equipped separator were measured by the same procedures as described above, and the adhesiveness and heat shrinkage resistance of the functional layer after 90 days at rest were evaluated in accordance with the same standards as described above. Moreover, the evaluation results for adhesiveness and heat shrinkage resistance before 90 days at rest (i.e., the evaluation results of "adhesiveness" and "heat shrinkage resistance" described above) and the evaluation results for adhesiveness and heat shrinkage resistance after 90 days at rest were compared, and an evaluation was made by the following standard.
A: Evaluation results for both adhesiveness and heat shrinkage resistance do not change between before and after 90 days at rest
B: Evaluation result for either of adhesiveness or heat shrinkage resistance downgraded by one level between before and after 90 days at rest
C: Evaluation results for both of adhesiveness and heat shrinkage resistance downgraded by one level between before and after 90 days at rest or evaluation result for either of adhesiveness or heat shrinkage resistance downgraded by two levels between before and after 90 days at rest

### <Cycle characteristics of secondary battery>

A produced lithium ion secondary battery was left at rest in a 25°C environment for 24 hours. Thereafter, the lithium ion secondary battery was subjected to a charge/discharge operation of charging to 4.2 V by a constant-current constant-voltage (CC-CV) method with a charge rate of 1C (cut-off condition: 0.02C) and discharging to 3.0 V by a constant-current (CC) method with a discharge rate of 1C in a 25°C environment, and the initial capacity C0 was measured.

The lithium ion secondary battery was repeatedly subjected to the same charge/discharge operation in a 25°C environment, and the capacity C1 after 300 cycles was measured. A capacity maintenance rate ΔC was calculated (ΔC = (C1/C0) × 100(%)) and was evaluated by the following standard. A higher value for this capacity maintenance rate indicates less reduction of discharge capacity and better cycle characteristics.
A: Capacity maintenance rate ΔC of 85% or more
B: Capacity maintenance rate ΔC of not less than 75% and less than 85%
C: Capacity maintenance rate ΔC of less than 75%

### (Example 1)

### <Production of water dispersion (binder) containing particulate polymer>

A reactor including a stirrer was supplied with 90 parts of deionized water, 0.05 parts of sodium dodecylbenzenesulfonate (NEOPELEX G-15 produced by Kao Corporation) as an emulsifier, and 0.23 parts of ammonium persulfate as a polymerization initiator. The gas phase was purged with nitrogen gas, and the temperature was raised to 70°C.

Meanwhile, a monomer composition was obtained in a separate vessel by mixing 50 parts of deionized water, 0.2 parts of sodium dodecylbenzenesulfonate (NEOPELEX G-15 produced by Kao Corporation) as an emulsifier, 70 parts of butyl acrylate (BA) as a (meth)acrylic acid ester monomer, 10 parts of acrylonitrile (AN) as a cyano group-containing monomer, 17.8 parts of allyl glycidyl ether (AGE) and 2 parts of N-methylolacrylamide (NMA) as reactive functional group-containing monomers, and 0.2 parts of acrylic acid (AA) as an acidic functional group-containing monomer. The monomer composition was continuously added into the reactor over 3 hours to perform polymerization. The reaction was carried out at 70°C during the addition. Once the addition was complete, the reaction liquid was cooled to 50°C, 0.2 parts of t-butyl peroxy-2-ethylhexanoate (produced by NOF Corporation; product name: PERBUTYL O) as a polymerization initiator was added, and 0.1 parts of ascorbic acid as a reductant was added. Three hours of stirring was performed, and then the reaction was ended to produce a water dispersion (binder) containing a particulate polymer. pH adjustment was performed using 10% ammonia water so as to adjust the obtained binder to pH 6. Note that the solid content of the binder was 40%. Measurements of various attributes were performed for the obtained binder. The results are shown in Table 1.

### <Production of slurry composition>

In production of a slurry composition, alumina particles (AKP-3000 produced by Sumitomo Chemical Co., Ltd.; volume-average particle diameter D50 = 0.7 µm) were used as non-conductive particles, a sodium salt of an acrylic acid/sulfonic acid monomer copolymer (produced by Nippon Shokubai Co., Ltd.; product name: Aqualic GL366) was used as a dispersant, carboxymethyl cellulose having a degree of etherification of 0.8 to 1.0 (produced by Daicel FineChem Ltd.; product name: 1220) was used as a viscosity modifier, and a polyethylene glycol type surfactant (NOPTECHS ED-052 produced by San Nopco Limited) was used as a surfactant. Note that the viscosity of a 1% aqueous solution of the viscosity modifier was 10 mPa·s to 20 mPa·s.

First, 100 parts of the non-conductive particles and 0.5 parts of the dispersant were mixed with deionized water and were processed for 1 hour using a bead mill (LMZ015 produced by Ashizawa Finetech Ltd.) to obtain a dispersion liquid. In addition, the water dispersion containing the particulate polymer in an amount such as to be 3 parts in terms of solid content, a 4% aqueous solution of the carboxymethyl cellulose in an amount such as to be 1.5 parts in terms of solid content, and 0.2 parts of the polyethylene glycol type surfactant were mixed, thereby producing a slurry composition having a solid content of 40 mass%.

### <Production of separator including functional layer at one side>

A separator substrate made of polyethylene (produced by Asahi Kasei Corporation; product name: ND412; thickness: 12 µm) was prepared. The slurry composition produced as described above was applied onto the surface of the prepared separator substrate and was dried at a temperature of 50°C for 3 minutes to obtain a separator including a functional layer at one side (functional layer thickness: 3 µm). The obtained functional layer-equipped separator was used to evaluate adhesiveness, heat shrinkage resistance, and preservation stability. The results are shown in Table 1.

### <Production of negative electrode>

A 5 MPa pressure-resistant vessel equipped with a stirrer was charged with 33 parts of 1,3-butadiene as an aliphatic conjugated diene monomer, 3.5 parts of itaconic acid as a carboxyl group-containing monomer, 63.5 parts of styrene as an aromatic vinyl monomer, 0.4 parts of sodium dodecylbenzenesulfonate as an emulsifier, 150 parts of deionized water, and 0.5 parts of potassium persulfate as a polymerization initiator. These materials were thoroughly stirred, and the resultant solution thereof was heated to 50°C to initiate polymerization. At the point at which the polymerization conversion rate reached 96%, cooling was performed to quench the polymerization reaction to yield a mixture containing a particulate binder (styrene-butadiene copolymer). This mixture was adjusted to pH 8 through addition of 5% sodium hydroxide aqueous solution and was subsequently subjected to thermal-vacuum distillation to remove unreacted monomer. Thereafter, the mixture from which unreacted monomer had been removed was cooled to 30°C or lower to yield a water dispersion containing a binding material for a negative electrode.

A planetary mixer was charged with 48.75 parts of artificial graphite (theoretical capacity: 360 mAh/g) and 48.75 parts of natural graphite (theoretical capacity: 360 mAh/g) as negative electrode active materials and 1 part in terms of solid content of carboxymethyl cellulose as a thickener. These materials were diluted to a solid content of 60% with deionized water and were then kneaded at a rotation speed of 45 rpm for 60 minutes. Thereafter, 1.5 parts in terms of solid content of the water dispersion containing the binding material for a negative electrode described above was added and was kneaded therewith at a rotation speed of 40 rpm for 40 minutes. Moreover, the viscosity was adjusted to 3,000 ± 500 mPa·s (measured by B-type viscometer at 25°C and 60 rpm) through addition of deionized water to produce a slurry composition for a negative electrode mixed material layer.

The slurry composition for a negative electrode mixed material layer was applied onto the surface of copper foil of 15 µm in thickness serving as a current collector by a comma coater such as to have a coating weight of 11 ± 0.5 mg/cm². Thereafter, the copper foil with the slurry composition for a negative electrode mixed material layer applied thereon was conveyed inside an oven having a temperature of 80°C for 2 minutes and an oven having a temperature of 110°C for 2 minutes at a speed of 400 mm/min so as to dry the slurry composition on the copper foil and thereby obtain a negative electrode web having a negative electrode mixed material layer formed on the current collector.

The negative electrode mixed material layer-side of the produced negative electrode web was subsequently roll pressed under a condition of a line pressure of 11 t (tons) in an environment having a temperature of 25 ± 3°C to obtain a negative electrode having a negative electrode mixed material layer density of 1.60 g/cm³. The negative electrode was then left in an environment having a temperature of 25 ± 3°C and a relative humidity of 50 ± 5% for 1 week.

### <Production of positive electrode>

A slurry composition for a positive electrode mixed material layer was produced by adding 96 parts of an active material NMC111 (LiNi_{1/3}Co_{1/3}Mn_{1/3}O₂) based on a lithium complex oxide of Co-Ni-Mn as a positive electrode active material, 2 parts of acetylene black (produced by Denka Company Limited; product name: HS-100) as a conductive material, and 2 parts of polyvinylidene fluoride (produced by Kureha Corporation; product name: KF-1100) as a binding material into a planetary mixer, further adding N-methyl-2-pyrrolidone (NMP) as a dispersion medium such that the total solid content was 67%, and mixing these materials.

The obtained slurry composition for a positive electrode mixed material layer was then applied onto aluminum foil of 20 µm in thickness serving as a current collector by a comma coater such as to have a coating weight of 20 ± 0.5 mg/cm².

The aluminum foil was conveyed inside an oven having a temperature of 90°C for 2 minutes and an oven having a temperature of 120°C for 2 minutes at a speed of 200 mm/min so as to dry the slurry composition on the aluminum foil and thereby obtain a positive electrode web having a positive electrode mixed material layer formed on the current collector.

The positive electrode mixed material layer-side of the produced positive electrode web was subsequently roll pressed under a condition of a line pressure of 14 t (tons) in an environment having a temperature of 25 ± 3°C to obtain a positive electrode having a positive electrode mixed material layer density of 3.40 g/cm³. The positive electrode was then left in an environment having a temperature of 25 ± 3°C and a relative humidity of 50 ± 5% for 1 week.

### <Production of secondary battery>

The post-pressing positive electrode obtained as described above was cut out as a square of 4 cm × 4 cm, and the post-pressing negative electrode was cut out as 4.2 cm × 4.2 cm. Moreover, the functional layer-equipped separator including a functional layer that was obtained as described above was cut out as 5 cm × 5 cm. Next, the cut-out functional layer-equipped separator was arranged on the positive electrode mixed material layer of the cut-out post-pressing positive electrode with the functional layer-coated surface thereof facing toward the positive electrode mixed material layer. In addition, the cut-out post-pressing negative electrode mixed material layer was arranged facing toward the arranged functional layer-equipped separator on a surface of the functional layer-equipped separator that was not in contact with the positive electrode, thereby obtaining a battery member laminate (positive electrode/functional layer/separator substrate/negative electrode). Next, the obtained laminate was enclosed in an aluminum packing case serving as a battery case, and electrolyte solution (solvent: ethylene carbonate (EC)/diethyl carbonate (DEC)/vinylene carbonate (VC) (volume ratio = 68.5/30/1.5); electrolyte: LiPF₆ of 1 mol/L in concentration) was injected such that no air remained. Next, an opening of the aluminum packing case was heat sealed at a temperature of 150°C to tightly close the aluminum packing case and thereby produce a 40 mAh stacked lithium ion secondary battery. This lithium ion secondary battery was used to evaluate cycle characteristics. The result is shown in Table 1.

### (Example 2)

Various operations, measurements, and evaluations were performed in the same way as in Example 1 with the exception that in production of a water dispersion containing a particulate polymer, a monomer composition was obtained with acrylic acid as an acidic functional group-containing monomer changed to methacrylic acid. The results are shown in Table 1.

### (Example 3)

Various operations, measurements, and evaluations were performed in the same way as in Example 2 with the exception that in production of a water dispersion containing a particulate polymer, a monomer composition was obtained with allyl glycidyl ether as a reactive functional group-containing monomer changed to glycidyl methacrylate. The results are shown in Table 1.

### (Example 4)

Various operations, measurements, and evaluations were performed in the same way as in Example 3 with the exception that in production of a water dispersion containing a particulate polymer, a monomer composition was obtained with acrylonitrile as a cyano group-containing monomer changed to methacrylonitrile. The results are shown in Table 1.

### (Example 5)

Various operations, measurements, and evaluations were performed in the same way as in Example 1 with the exception that in production of a water dispersion containing a particulate polymer, a monomer composition was obtained by mixing 0.2 parts of sodium dodecylbenzenesulfonate (NEOPELEX G-15 produced by Kao Corporation) as an emulsifier, 70 parts of butyl acrylate as a (meth)acrylic acid ester monomer, 10 parts of acrylonitrile as a cyano group-containing monomer, 18 parts of allyl glycidyl ether and 1.4 parts of N-methylolacrylamide as reactive functional group-containing monomers, 0.2 parts of methacrylic acid as an acidic functional group-containing monomer, and 0.4 parts of ethylene glycol dimethacrylate as a cross-linkable monomer. The results are shown in Table 1.

### (Example 6)

Various operations, measurements, and evaluations were performed in the same way as in Example 5 with the exception that in production of the water dispersion containing a particulate polymer, a monomer composition was obtained with allyl glycidyl ether as a reactive functional group-containing monomer changed to glycidyl methacrylate and ethylene glycol dimethacrylate as a cross-linkable monomer changed to allyl methacrylate. The results are shown in Table 1.

### (Example 7)

Various operations, measurements, and evaluations were performed in the same way as in Example 6 with the exception that in production of a water dispersion containing a particulate polymer, a monomer composition was obtained with the amount of butyl acrylate as a (meth)acrylic acid ester monomer changed to 53 parts and the amount of acrylonitrile as a cyano group-containing monomer changed to 27 parts. The results are shown in Table 1.

### (Example 8)

Various operations, measurements, and evaluations were performed in the same way as in Example 6 with the exception that in production of a water dispersion containing a particulate polymer, a monomer composition was obtained with the amount of butyl acrylate as a (meth)acrylic acid ester monomer changed to 76 parts and the amount of acrylonitrile as a cyano group-containing monomer changed to 4 parts. The results are shown in Table 1.

### (Example 9)

Various operations, measurements, and evaluations were performed in the same way as in Example 6 with the exception that in production of a water dispersion containing a particulate polymer, a monomer composition was obtained with the amount of butyl acrylate as a (meth)acrylic acid ester monomer changed to 60 parts and the amount of glycidyl methacrylate as a reactive functional group-containing monomer changed to 28 parts. The results are shown in Table 1.

### (Example 10)

Various operations, measurements, and evaluations were performed in the same way as in Example 6 with the exception that in production of a water dispersion containing a particulate polymer, a monomer composition was obtained with the amount of butyl acrylate as a (meth)acrylic acid ester monomer changed to 80 parts and the amount of glycidyl methacrylate as a reactive functional group-containing monomer changed to 8 parts. The results are shown in Table 1.

### (Example 11)

Various operations, measurements, and evaluations were performed in the same way as in Example 6 with the exception that in production of a water dispersion containing a particulate polymer, a monomer composition was obtained with the amount of N-methylolacrylamide as a reactive functional group-containing monomer changed to 0.9 parts, the amount of methacrylic acid as an acidic functional group-containing monomer changed to 0.8 parts, and the amount of allyl methacrylate as a cross-linkable monomer changed to 0.3 parts. The results are shown in Table 1.

### (Example 12)

Various operations, measurements, and evaluations were performed in the same way as in Example 6 with the exception that in production of a water dispersion containing a particulate polymer, a monomer composition was obtained with the amount of methacrylic acid as an acidic functional group-containing monomer changed to 0.1 parts and the amount of allyl methacrylate as a cross-linkable monomer changed to 0.5 parts. The results are shown in Table 1.

### (Example 13)

Various operations, measurements, and evaluations were performed in the same way as in Example 6 with the exception that in production of a water dispersion containing a particulate polymer, a monomer composition was obtained with the amount of butyl acrylate as a (meth)acrylic acid ester monomer changed to 67.8 parts, the amount of N-methylolacrylamide as a reactive functional group-containing monomer changed to 3 parts, and the amount of allyl methacrylate as a cross-linkable monomer changed to 1 part. The results are shown in Table 1.

### (Example 14)

Various operations, measurements, and evaluations were performed in the same way as in Example 6 with the exception that in production of a water dispersion containing a particulate polymer, a monomer composition was obtained with the amount of butyl acrylate as a (meth)acrylic acid ester monomer changed to 71.1 parts, the amount of N-methylolacrylamide as a reactive functional group-containing monomer changed to 0.5 parts, and the amount of allyl methacrylate as a cross-linkable monomer changed to 0.2 parts. The results are shown in Table 1.

### (Example 15)

Various operations, measurements, and evaluations were performed in the same way as in Example 6 with the exception that in production of a water dispersion containing a particulate polymer, the pH was adjusted to 4.5. The results are shown in Table 1.

### (Example 16)

Various operations, measurements, and evaluations were performed in the same way as in Example 6 with the exception that in production of a water dispersion containing a particulate polymer, the pH was adjusted to 7.5. The results are shown in Table 1.

### (Example 17)

Various operations, measurements, and evaluations were performed in the same way as in Example 6 with the exception that in production of a water dispersion containing a particulate polymer, the amount of emulsifier that was charged to the reactor in advance was changed from 0.05 parts to 0 parts (i.e., the reactor was not charged with an emulsifier), and the volume-average particle diameter of the particulate polymer was adjusted to 0.18 µm. The results are shown in Table 1.

### (Example 18)

Various operations, measurements, and evaluations were performed in the same way as in Example 6 with the exception that in production of a water dispersion containing a particulate polymer, the amount of emulsifier that was charged to the reactor in advance was changed from 0.05 parts to 0.1 parts, and the volume-average particle diameter of the particulate polymer was adjusted to 0.12 µm. The results are shown in Table 1.

### (Example 19)

Various operations, measurements, and evaluations were performed in the same way as in Example 6 with the exception that in production of a slurry composition, alumina particles as non-conductive particles were changed to boehmite (APYRAL AOH60 produced by Nabaltec; volume-average particle diameter D50 = 0.9 µm). The results are shown in Table 1.

### (Example 20)

Various operations, measurements, and evaluations were performed in the same way as in Example 6 with the exception that in production of a slurry composition, alumina particles as non-conductive particles were changed to barium sulfate (TS-3 produced by Takehara Kagaku Kogyo Co., Ltd.; volume-average particle diameter D50 = 0.6 µm). The results are shown in Table 1.

### (Example 21)

Various operations, measurements, and evaluations were performed in the same way as in Example 6 with the exception that in production of a slurry composition, carboxymethyl cellulose as a viscosity modifier was changed to anionic polyacrylamide (POLYSTRON 117 produced by Arakawa Chemical Industries, Ltd.). The results are shown in Table 1.

### (Comparative Example 1)

Various operations, measurements, and evaluations were performed in the same way as in Example 6 with the exception that in production of a water dispersion containing a particulate polymer, a monomer composition was obtained with the amount of butyl acrylate as a (meth)acrylic acid ester monomer changed to 50 parts and the amount of allyl glycidyl ether as a reactive functional group-containing monomer changed to 38 parts. The results are shown in Table 1.

### (Comparative Example 2)

Various operations, measurements, and evaluations were performed in the same way as in Example 1 with the exception that in production of a water dispersion containing a particulate polymer, a monomer composition was obtained by mixing 0.2 parts of sodium dodecylbenzenesulfonate (NEOPELEX G-15 produced by Kao Corporation) as an emulsifier, 93.6 parts of butyl acrylate as a (meth)acrylic acid ester monomer, 2 parts of acrylonitrile as a cyano group-containing monomer, 2 parts of allyl glycidyl ether as a reactive functional group-containing monomer, 2 parts of methacrylic acid as an acidic functional group-containing monomer, and 0.4 parts of ethylene glycol dimethacrylate as a cross-linkable monomer. The results are shown in Table 1.

### (Comparative Example 3)

Various operations, measurements, and evaluations were performed in the same way as in Comparative Example 2 with the exception that in production of a water dispersion containing a particulate polymer, a monomer composition was obtained with the amount of butyl acrylate as a (meth)acrylic acid ester monomer changed to 77.6 parts, the amount of acrylonitrile as a cyano group-containing monomer changed to 10 parts, and the amount of allyl glycidyl ether as a reactive functional group-containing monomer changed to 10 parts. The results are shown in Table 1.

### (Comparative Example 4)

Various operations, measurements, and evaluations were performed in the same way as in Example 1 with the exception that in production of a water dispersion containing a particulate polymer, a monomer composition was obtained by mixing 0.2 parts of sodium dodecylbenzenesulfonate (NEOPELEX G-15 produced by Kao Corporation) as an emulsifier, 70 parts of butyl acrylate as a (meth)acrylic acid ester monomer, 10 parts of acrylonitrile as a cyano group-containing monomer, and 18 parts of glycidyl methacrylate and 2 parts of N-methylolacrylamide as reactive functional group-containing monomers. The results are shown in Table 1.

### (Comparative Example 5)

Various operations, measurements, and evaluations were performed in the same way as in Example 6 with the exception that in production of a water dispersion containing a particulate polymer, a monomer composition was obtained with the amount of butyl acrylate as a (meth)acrylic acid ester monomer changed to 65.8 parts, the amount of N-methylolacrylamide as a reactive functional group-containing monomer changed to 4 parts, and the amount of allyl methacrylate as a cross-linkable monomer changed to 2 parts. The results are shown in Table 1.

In Table 1, shown below:
"BA" indicates butyl acrylate unit;
"AN" indicates acrylonitrile unit;
"MAN" indicates methacrylonitrile unit;
"AA" indicates acrylic acid unit;
"MAA" indicates methacrylic acid unit;
"AGE" indicates allyl glycidyl ether unit;
"GMA" indicates glycidyl methacrylate unit;
"NMA" indicates N-methylolacrylamide unit;
"EDMA" indicates ethylene glycol dimethacrylate unit;
"AMA" indicates allyl methacrylate unit;
"COO/SO₃[Na]" indicates sodium salt of acrylic acid/sulfonic acid monomer copolymer;
"CMC" indicates carboxymethyl cellulose;
"PAA" indicates polyacrylamide;
"PEG type" indicates surfactant is of polyethylene glycol type;
"Elastic modulus after accelerated testing" indicates elastic modulus of film formed of particulate polymer after accelerated testing; and
"Elastic modulus before accelerated testing" indicates elastic modulus of film formed of particulate polymer before accelerated testing.

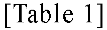

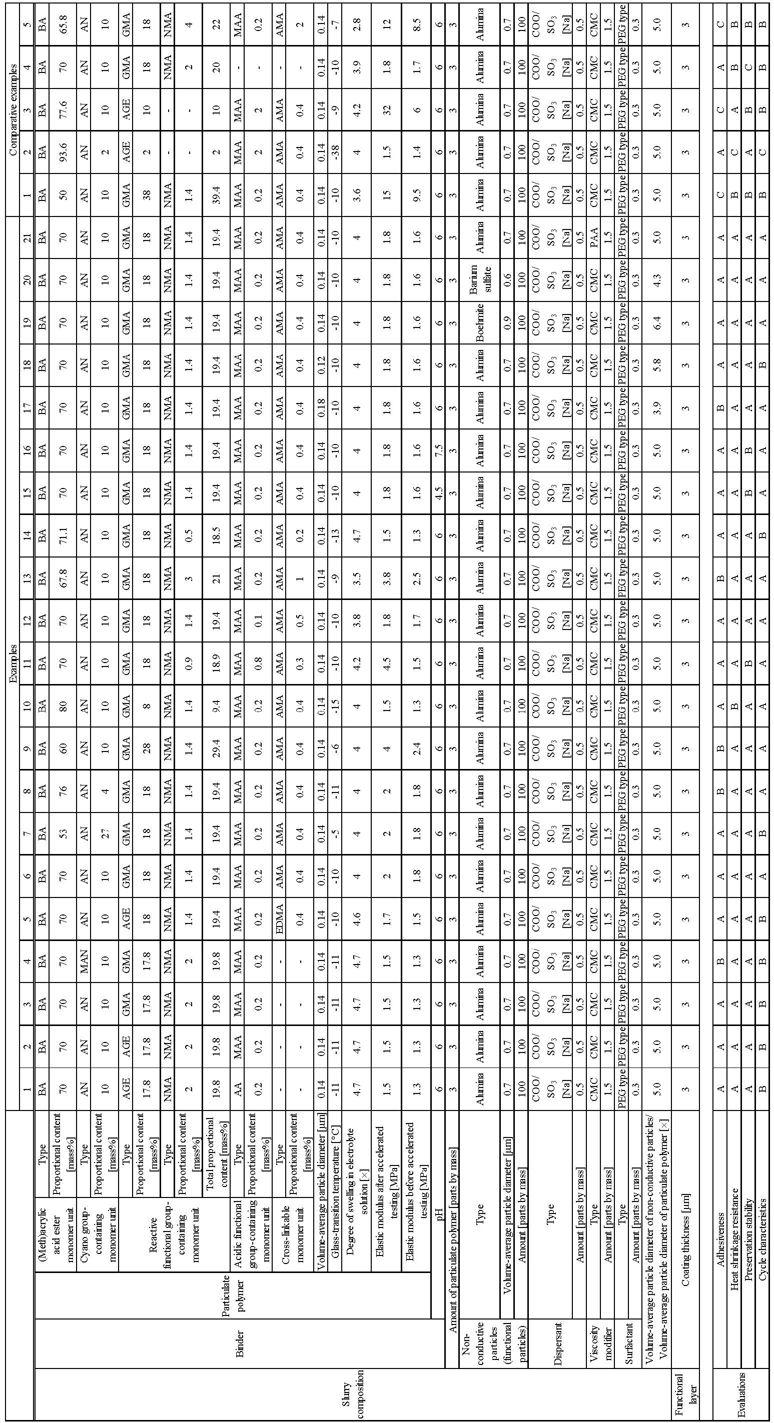

As can clearly be seen from Table 1, it is possible to form a functional layer having excellent heat shrinkage resistance, adhesiveness, and preservation stability when using the binders of Examples 1 to 21.

### INDUSTRIAL APPLICABILITY

According to the present disclosure, it is possible to provide a binder for a secondary battery functional layer that can form a functional layer having excellent heat shrinkage resistance, adhesiveness, and preservation stability.

Moreover, according to the present disclosure, it is possible to provide a slurry composition for a secondary battery functional layer that can form a functional layer having excellent heat shrinkage resistance, adhesiveness, and preservation stability.

Furthermore, according to the present disclosure, it is possible to provide a functional layer for a secondary battery having excellent heat shrinkage resistance, adhesiveness, and preservation stability.

Also, according to the present disclosure, it is possible to provide a secondary battery including this functional layer.

## Claims

1. A binder for a secondary battery functional layer comprising a particulate polymer, wherein
the particulate polymer includes an acidic functional group-containing monomer unit and a reactive functional group-containing monomer unit including a functional group that can react with an acidic functional group,
proportional content of the reactive functional group-containing monomer unit is not less than 7 mass% and not more than 30 mass% when all monomer units included in the particulate polymer are taken to be 100 mass%, and
a film that is formed of the particulate polymer after accelerated testing has an elastic modulus of 10 MPa or less.

2. The binder for a secondary battery functional layer according to claim 1, wherein proportional content of the acidic functional group-containing monomer unit is not less than 0.1 mass% and not more than 1 mass% when all monomer units included in the particulate polymer are taken to be 100 mass%.

3. The binder for a secondary battery functional layer according to claim 1 or 2, wherein
the particulate polymer further includes a cross-linkable monomer unit, and
proportional content of the cross-linkable monomer unit is more than 0 mass% and not more than 1.5 mass% when all monomer units included in the particulate polymer are taken to be 100 mass%.

4. The binder for a secondary battery functional layer according to any one of claims 1 to 3, wherein
the particulate polymer further includes a cyano group-containing monomer unit, and
proportional content of the cyano group-containing monomer unit is not less than 2 mass% and not more than 30 mass% when all monomer units included in the particulate polymer are taken to be 100 mass%.

5. The binder for a secondary battery functional layer according to any one of claims 1 to 4, further comprising water and having a pH of not lower than 4 and not higher than 8.

6. The binder for a secondary battery functional layer according to any one of claims 1 to 5, wherein the particulate polymer has a glasstransition temperature of 20°C or lower.

7. The binder for a secondary battery functional layer according to any one of claims 1 to 6, wherein the particulate polymer has a volume-average particle diameter of not less than 0.1 µm and not more than 0.2 µm.

8. The binder for a secondary battery functional layer according to any one of claims 1 to 7, wherein the particulate polymer has a degree of swelling in electrolyte solution of not less than ×3 and not more than ×5.

9. A slurry composition for a secondary battery functional layer comprising: the binder for a secondary battery functional layer according to any one of claims 1 to 8; and functional particles.

10. The slurry composition for a secondary battery functional layer according to claim 9, wherein the functional particles include non-conductive particles.

11. The slurry composition for a secondary battery functional layer according to claim 10, wherein a ratio of a volume-average particle diameter of the non-conductive particles relative to a volume-average particle diameter of the particulate polymer is not less than ×2.0 and not more than ×7.0.

12. A functional layer for a secondary battery formed using the slurry composition for a secondary battery functional layer according to any one of claims 9 to 11.

13. A secondary battery comprising the functional layer for a secondary battery according to claim 12.
